# EUROPÄISCHE PATENTSCHRIFT

(11) **EP 2 866 985 B1**
(45) Veröffentlichungstag und Bekanntmachung des Hinweises auf die Patenterteilung: **21.07.2021**
(21) Anmeldenummer: 13722747.6
(22) Anmeldetag: 14.05.2013
(51) Int. Cl.: B27B 17/02, B23D 59/00

(54) **WERKZEUGMASCHINENTRENNVORRICHTUNG**
POWER CUTTING TOOL
DISPOSITIF DE SÉPARATION POUR MACHINE-OUTIL

(30) Priorität: 28.06.2012 DE 102012211087
(43) Veröffentlichungstag der Anmeldung: 06.05.2015
(73) Patentinhaber: Robert Bosch GmbH, 70442 Stuttgart (DE)
(72) Erfinder: ENGELFRIED, Uwe, 73760 Ostfildern (DE); GRULICH, Petr, 73230 Kirchheim/Teck (DE); DUERR Thomas, 71679 Asperg (DE)
(86) Internationale Anmeldenummer: PCT/EP2013/059921
(87) Internationale Veröffentlichungsnummer: WO 2014/000949

(56) Entgegenhaltungen:
- EP-A2- 2 460 623
- DE-A1-102010 043 182
- US-A- 3 810 309
- US-A- 4 316 327
- US-A- 4 355 551
- US-A- 4 382 334
- US-A- 5 396 705
- US-A1- 2006 159 533
- None

## Beschreibung

### Stand der Technik

Es sind bereits Werkzeugmaschinentrennvorrichtungen bekannt, die einen Schneidstrang und eine Führungseinheit zu einer Führung des Schneidstrangs aufweisen.

Als der US 4,382,334 A geht ein Gegenstand gemäß dem Oberbegriff des Anspruchs 1 hervor.

### Offenbarung der Erfindung

Die Erfindung geht aus von einer Werkzeugmaschinentrennvorrichtung, insbesondere von einer Handwerkzeugmaschinentrennvorrichtung, mit zumindest einem Schneidstrang und mit zumindest einer Führungseinheit zu einer Führung des Schneidstrangs.

Die Erfindung betrifft eine Werkzeugmaschinentrennvorrichtung gemäß Anspruch 1 und ein Werkzeugmaschinensystem gemäß Anspruch 4.

Es wird vorgeschlagen, dass die Werkzeugmaschinentrennvorrichtung zumindest eine Codierungseinheit umfasst, die zumindest ein Codierungselement aufweist, das dazu vorgesehen ist, zumindest eine Kopplungsschnittstelle der Führungseinheit zu codieren. Vorzugsweise ist das Codierungselement symmetrisch zu einer Längsachse des Codierungselements ausgebildet. Es ist jedoch auch denkbar, dass das Codierungselement asymmetrisch zur Längsachse des Codierungselements ausgebildet ist. Unter einem "Schneidstrang" soll hier insbesondere eine Einheit verstanden werden, die dazu vorgesehen ist, einen atomaren Zusammenhalt eines zu bearbeitenden Werkstücks örtlich aufzuheben, insbesondere mittels eines mechanischen Abtrennens und/oder mittels eines mechanischen Abtragens von Werkstoffteilchen des Werkstücks. Bevorzugt ist der Schneidstrang dazu vorgesehen, das Werkstück in zumindest zwei physikalisch voneinander getrennte Teile zu separieren und/oder zumindest teilweise Werkstoffteilchen des Werkstücks ausgehend von einer Oberfläche des Werkstücks abzutrennen und/oder abzutragen. Besonders bevorzugt wird der Schneidstrang in zumindest einem Betriebszustand umlaufend bewegt, insbesondere entlang einer Umfangsrichtung einer Führungseinheit der Werkzeugmaschinentrennvorrichtung. Besonders bevorzugt ist der Schneidstrang als Schneidkette ausgebildet. Es ist jedoch auch denkbar, dass der Schneidstrang eine andere, einem Fachmann als sinnvoll erscheinende Ausgestaltung aufweist, wie beispielsweise eine Ausgestaltung als Schneidband, an dem mehrere Schneidstrangsegmente des Schneidstrangs angeordnet sind. Bevorzugt weist der Schneidstrang, entlang einer zumindest im Wesentlichen senkrecht zu einer Schneidebene des Schneidstrangs verlaufenden Richtung betrachtet, eine maximale Abmessung kleiner als 4 mm auf. Vorzugsweise ist die Abmessung als Breite des Schneidstrangs ausgebildet. Besonders bevorzugt weist der Schneidstrang, entlang der zumindest im Wesentlichen senkrecht zur Schneidebene des Schneidstrangs verlaufenden Richtung betrachtet, entlang einer Gesamtlänge des Schneidstrangs, eine zumindest im Wesentlichen gleichbleibende maximale Abmessung auf. Die maximale Abmessung entspricht entlang der Gesamtlänge des Schneidstrangs bevorzugt einem Wert aus einem Wertebereich von 1 mm bis 3 mm. Infolgedessen weist die Werkzeugmaschinentrennvorrichtung, entlang einer Gesamterstreckung der Werkzeugmaschinentrennvorrichtung betrachtet, eine Gesamtbreite auf, die kleiner ist als 4 mm. Somit ist der Schneidstrang vorzugsweise dazu vorgesehen, einen Schneidspalt zu erzeugen, der, entlang der zumindest im Wesentlichen senkrecht zur Schneidebene des Schneidstrangs verlaufenden Richtung betrachtet, eine maximale Abmessung kleiner als 4 mm aufweist.

Unter einer "Führungseinheit" soll hier insbesondere eine Einheit verstanden werden, die dazu vorgesehen ist, eine Zwangskraft zumindest entlang einer Richtung senkrecht zu einer Schneidrichtung des Schneidstrangs auf den Schneidstrang auszuüben, um eine Bewegungsmöglichkeit des Schneidstrangs entlang der Schneidrichtung vorzugeben. Bevorzugt weist die Führungseinheit zumindest ein Führungselement auf, insbesondere eine Führungsnut, durch das der Schneidstrang geführt wird. Bevorzugt ist der Schneidstrang, in der Schneidebene betrachtet, entlang eines gesamten Umfangs der Führungseinheit durch die Führungseinheit mittels des Führungselements, insbesondere der Führungsnut, geführt. Besonders bevorzugt bilden der Schneidstrang und die Führungseinheit ein geschlossenes System. Der Begriff "geschlossenes System" soll hier insbesondere ein System definieren, das zumindest zwei Komponenten umfasst, die mittels eines Zusammenwirkens in einem demontierten Zustand des Systems von einem dem System übergeordneten System, wie beispielsweise einer Werkzeugmaschine, eine Funktionalität beibehalten und/oder die im demontierten Zustand unverlierbar miteinander verbunden sind. Bevorzugt sind die zumindest zwei Komponenten des geschlossenen Systems für einen Bediener zumindest im Wesentlichen unlösbar miteinander verbunden. Unter "zumindest im Wesentlichen unlösbar" soll hier insbesondere eine Verbindung von zumindest zwei Bauteilen verstanden werden, die lediglich unter der Zuhilfenahme von Trennwerkzeugen, wie beispielsweise einer Säge, insbesondere einer mechanischen Säge usw., und/oder chemischen Trennmitteln, wie beispielsweise Lösungsmitteln usw., voneinander trennbar sind.

Der Ausdruck "Codierungseinheit" soll hier insbesondere eine Einheit definieren, die dazu vorgesehen ist, eine Kopplungsschnittstelle der Werkzeugmaschinentrennvorrichtung mechanisch zu verschlüsseln, insbesondere gemäß einem Schlüssel-Schlüsselloch-Prinzip. Bevorzugt ist die Codierungseinheit dazu vorgesehen, eine Montierbarkeit der Führungseinheit bzw. der Werkzeugmaschinentrennvorrichtung an Bauteilen zu ermöglichen, die eine mit der verschlüsselten Kopplungsschnittstelle korrespondierende Ausgestaltung, insbesondere eine Ausgestaltung zur Entschlüsselung der verschlüsselten Kopplungsschnittstelle, aufweisen. Ferner ist die Codierungseinheit bevorzugt dazu vorgesehen, eine Montierbarkeit der Führungseinheit bzw. der Werkzeugmaschinentrennvorrichtung an Bauteilen zu verhindern, die eine von der verschlüsselten Kopplungsschnittstelle abweichende Ausgestaltung, insbesondere eine zur Entschlüsselung der verschlüsselten Kopplungsschnittstelle ungeeignete Ausgestaltung, aufweisen. Zudem ist die Codierungseinheit vorzugsweise dazu vorgesehen, eine Kopplungsposition der Werkzeugmaschinentrennvorrichtung, insbesondere eine Ausrichtung der Werkzeugmaschinentrennvorrichtung relativ zu einer Kopplungsvorrichtung einer tragbaren Werkzeugmaschine, mittels des Codierungselements vorzugeben. Unter "vorgesehen" soll hier insbesondere speziell ausgelegt, speziell ausgestattet und/oder speziell programmiert verstanden werden. Mittels der Ausgestaltung der Werkzeugmaschinentrennvorrichtung kann vorteilhaft eine fehlerhafte Kopplung der Werkzeugmaschinentrennvorrichtung an einer Kopplungsvorrichtung einer tragbaren Werkzeugmaschine verhindert werden. Zudem kann vorteilhaft eine Kopplung der Werkzeugmaschinentrennvorrichtung an einer Kopplungsvorrichtung einer tragbaren Werkzeugmaschine, die entkoppelt ist von einem mit dem Codierungselement korrespondierenden Entcodierungselement, verhindert werden, um beispielsweise eine Kopplung der Werkzeugmaschinentrennvorrichtung an einer Kopplungsvorrichtung einer tragbaren Werkzeugmaschine, die hinsichtlich einer Antriebsleistung für einen Antrieb des Schneidstrangs überdimensioniert ist, zu vermeiden.

Des Weiteren wird vorgeschlagen, dass sich das Codierungselement zu einer Codierung der Kopplungsschnittstelle zumindest im Wesentlichen parallel zu einer Schneidebene des Schneidstrangs erstreckt. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Vorzugsweise erstreckt sich das Codierungselement zumindest im Wesentlichen parallel zu einer Außenfläche der Führungseinheit. Der Begriff "Schneidebene" soll hier insbesondere eine Ebene definieren, in der der Schneidstrang in zumindest einem Betriebszustand zu einer Bearbeitung eines Werkstücks bewegt wird. Vorzugsweise wird der Schneidstrang in der Schneidebene entlang eines Umfangs der Führungseinheit in zumindest zwei zueinander entgegengesetzt gerichtete Schneidrichtungen relativ zur Führungseinheit bewegt. Bevorzugt ist die Schneidebene bei einer Bearbeitung eines Werkstücks zumindest im Wesentlichen quer zu einer bearbeitenden Werkstückoberfläche ausgerichtet. Unter "zumindest im Wesentlichen quer" soll hier insbesondere eine Ausrichtung einer Ebene und/oder einer Richtung relativ zu einer weiteren Ebene und/oder einer weiteren Richtung verstanden werden, die bevorzugt von einer parallelen Ausrichtung der Ebene und/oder der Richtung relativ zu der weiteren Ebene und/oder der weiteren Richtung abweicht. Es ist jedoch auch denkbar, dass die Schneidebene bei einer Bearbeitung eines Werkstücks zumindest im Wesentlichen parallel zu einer bearbeitenden Werkstückoberfläche ausgerichtet ist, insbesondere bei einer Ausbildung des Schneidstrangs als Schleifmittel usw. Mittels der Ausgestaltung kann vorteilhaft eine hinsichtlich einer sich zumindest im Wesentlichen senkrecht zur Außenfläche der Führungseinheit erstreckenden Breite der Werkzeugmaschinentrennvorrichtung kompakte Ausgestaltung der Werkzeugmaschinentrennvorrichtung erreicht werden.

Erfindungsgemäß ragt das Codierungselement, betrachtet in einer Schneidebene des Schneidstrangs, axial über die Führungseinheit hinaus. Das Codierungselement ragt bevorzugt entlang einer Mittelachse der Führungseinheit axial über die Führungseinheit hinaus. Somit kann besonders vorteilhaft ein Codierungselement erreicht werden, das zusätzlich zu einer Codierungsfunktion eine Drehkraftabstützfunktion aufweist.

Des Weiteren wird vorgeschlagen, dass das Codierungselement zumindest in einem Teilbereich, entlang einer zumindest im Wesentlichen parallel zu einer Schneidebene des Schneidstrangs verlaufenden Richtung betrachtet, eine größere maximale Breitenerstreckung aufweist als eine maximale Breitenerstreckung des Schneidstrangs. Die maximale Breitenerstreckung des Codierungselements erstreckt sich bevorzugt zumindest im Wesentlichen senkrecht zu einer Längsachse des Codierungselements. Ferner erstreckt sich die maximale Breitenerstreckung der Führungseinheit und/oder des Schneidstrangs zumindest im Wesentlichen senkrecht zu einer Längsachse der Führungseinheit. Insbesondere ist ein Verhältnis von der maximalen Breitenerstreckung der Führungseinheit und/oder des Schneidstrangs zur maximalen Breitenerstreckung des Codierungselements größer/gleich 0,3, bevorzugt größer/gleich 0,4 und besonders bevorzugt größer 0,5. Der erfindungsgemäße Teilbereich des Codierungselements, in dem das Codierungselement die maximale Breitenerstreckung aufweist, ist ellipsenförmig ausgebildet. Mittels der Ausgestaltung kann zumindest in einem Teilbereich ein Berührschutz durch das Codierungselement erreicht werden.

Ferner wird vorzugsweise vorgeschlagen, dass sich das Codierungselement zu einer Codierung der Kopplungsschnittstelle zumindest im Wesentlichen quer zur Schneidebene des Schneidstrangs erstreckt. Vorzugsweise erstreckt sich das Codierungselement zu einer Codierung der Kopplungsschnittstelle zumindest im Wesentlichen senkrecht zur Schneidebene des Schneidstrangs. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Zudem kann das Codierungselement sich zusätzlich zumindest im Wesentlichen parallel zur Schneidebene erstrecken. Mittels einer zumindest im Wesentlichen senkrechten Erstreckung des Codierungselements kann vorteilhaft eine formschlüssige Verbindung realisiert werden, die eine Bewegung der Werkzeugmaschinentrennvorrichtung bzw. der Führungseinheit in einem mit einer Kopplungsvorrichtung einer tragbaren Werkzeugmaschine entlang einer zumindest im Wesentlichen parallel zur Schneidebene verlaufenden Richtung unterbindet.

Nicht erfindungsgemäß wird vorgeschlagen, dass das Codierungselement als Fortsatz ausgebildet ist, der zumindest in einem Teilbereich, entlang einer zumindest im Wesentlichen senkrecht zur Schneidebene des Schneidstrangs verlaufenden Richtung betrachtet, eine größere maximale Dickenerstreckung aufweist als eine maximale Dickenerstreckung der Führungseinheit und/oder des Schneidstrangs. Nicht erfindungsgemäß ist das Codierungselement als Längsfortsatz ausgebildet, der sich zumindest im Wesentlichen parallel zur Schneidebene erstreckt. Bevorzugt ist die maximale Dickenerstreckung des Fortsatzes symmetrisch zur Schneidebene ausgerichtet. Insbesondere ist ein Verhältnis zwischen der maximalen Dickenerstreckung des Codierungselements und der maximalen Dickenerstreckung der Führungseinheit und/oder des Schneidstrangs größer als 0,16, bevorzugt größer als 0,2 und besonders bevorzugt größer als 0,5. Vorzugsweise weist die Codierungseinheit, entlang einer zumindest im Wesentlichen senkrecht zur Schneidebene des Schneidstrangs verlaufenden Richtung betrachtet, eine größere maximale Dickenerstreckung auf als eine maximale Dickenerstreckung der Führungseinheit und/oder des Schneidstrangs. Es kann konstruktiv einfach ein Codierungselement realisiert werden. Zudem kann vorteilhaft eine Beschädigung einer Kopplungsvorrichtung der Werkzeugmaschine während eines um einen Umfang der Führungseinheit umlaufenden Schneidstrangs verhindert werden. Ferner kann somit vorteilhaft ein breites Einsatzspektrum hinsichtlich unterschiedlich dicken Schneidsträngen an der Führungseinheit, an der die Codierungseinheit angeordnet ist, erreicht werden.

Des Weiteren wird nicht erfindungsgemäß vorgeschlagen, dass das Codierungselement als Fortsatz ausgebildet ist, der zumindest in einem Teilbereich, entlang einer zumindest im Wesentlichen senkrecht zu einer Schneidebene des Schneidstrangs verlaufenden Richtung betrachtet, eine kleinere maximale Dickenerstreckung aufweist als eine maximale Dickenerstreckung der Führungseinheit und/oder des Schneidstrangs. Somit kann vorteilhaft ein dünnes, kompaktes Codierungselement realisiert werden.

Ferner wird vorgeschlagen, dass sich das Codierungselement, betrachtet in einer Schneidebene des Schneidstrangs, zumindest im Wesentlichen quer zu einer Mittelachse der Führungseinheit erstreckt. Hierbei ist das Codierungselement vorzugsweise asymmetrisch zur Mittelachse an der Führungseinheit angeordnet. Der Ausdruck "Mittelachse der Führungseinheit" soll hier insbesondere eine zumindest im Wesentlichen parallel zu einer Außenfläche der Führungseinheit durch die Führungseinheit verlaufende Achse definieren, zu der die Führungseinheit bevorzugt symmetrisch ausgebildet ist. Bevorzugt ist das Codierungselement im Bereich einer Antriebsseite der Führungseinheit an der Führungseinheit angeordnet. Unter einer "Antriebsseite" soll hier insbesondere eine Seite der Führungseinheit verstanden werden, an der ein Antriebselement der tragbaren Werkzeugmaschine zu einer Übertragung von Antriebskräften und/oder Antriebsdrehmomenten auf den Schneidstrang in einem mit einer Kopplungsvorrichtung einer tragbaren Werkzeugmaschine verbundenen Zustand der Werkzeugmaschinentrennvorrichtung, insbesondere der Führungseinheit, mit dem Schneidstrang und/oder einem Drehmomentübertragungselement der Werkzeugmaschinentrennvorrichtung koppelbar ist und insbesondere in die Führungseinheit eingreift. Mittels der Ausgestaltung kann vorteilhaft mittels des Codierungselements zusätzlich zu einer Codierung der Kopplungsschnittstelle eine Kopplungsposition der Werkzeugmaschinentrennvorrichtung bzw. der Führungseinheit vorgegeben werden.

Nicht erfindungsgemäß weist die Codierungseinheit zumindest eine elektronische Codeübermittlungseinheit auf. Bevorzugt übermittelt die elektronische Codeübermittlungseinheit bei einer Annäherung der Werkzeugmaschinentrennvorrichtung bzw. der Führungseinheit an eine Kopplungsvorrichtung einer tragbaren Werkzeugmaschine automatisch einen Code, der von einer elektronischen Ausleseeinheit der tragbaren Werkzeugmaschine mittels elektromagnetischer Wellen ausgelesen wird. Nicht erfindungsgemäß weist die Codierungseinheit eine andere, einem Fachmann als sinnvoll erscheinende Ausgestaltung auf, wie beispielsweise eine Ausgestaltung als Hologrammcodierungseinheit, die ein als Hologramm ausgebildetes Codierungselement aufweist, das von einer elektronischen Ausleseeinheit der tragbaren Werkzeugmaschine auslesbar ist. Hierdurch kann besonders vorteilhaft eine sichere Codierung der Kopplungsschnittstelle erreicht werden.

Nicht erfindungsgemäß ist das Codierungselement als RFID-Chip ausgebildet. Es ist jedoch auch denkbar, dass das Codierungselement eine andere, einem Fachmann als sinnvoll erscheinende Ausgestaltung aufweist. Mittels der Ausgestaltung kann besonders kostengünstig und bauraumsparend eine Codierung der Kopplungsschnittstelle erreicht werden.

Ferner geht die Erfindung aus von einer tragbaren Werkzeugmaschine mit einer Kopplungsvorrichtung zur formschlüssigen und/oder kraftschlüssigen Kopplung mit einer Werkzeugmaschinentrennvorrichtung. Unter einer "tragbaren Werkzeugmaschine" soll hier insbesondere eine Werkzeugmaschine, insbesondere eine Handwerkzeugmaschine, verstanden werden, die von einem Bediener transportmaschinenlos transportiert werden kann. Die tragbare Werkzeugmaschine weist insbesondere eine Masse auf, die kleiner ist als 40 kg, bevorzugt kleiner als 10 kg und besonders bevorzugt kleiner als 5 kg. Besonders bevorzugt bilden die Werkzeugmaschinentrennvorrichtung und die tragbare Werkzeugmaschine ein Werkzeugmaschinensystem. Vorzugsweise weist die tragbare Werkzeugmaschine eine mit der Codierungseinheit korrespondierende Entcodierungseinheit auf, die zumindest ein Entcodierungselement aufweist, das mit dem Codierungselement der Codierungseinheit zusammenwirkt. Es kann vorteilhaft sichergestellt werden, dass lediglich eine Kopplung der Kopplungsvorrichtung mit geeigneten Werkzeugmaschinentrennvorrichtungen möglich ist, die für einen Betrieb mit der tragbaren Werkzeugmaschine vorgesehen sind.

### Zeichnung

Weitere Vorteile ergeben sich aus der folgenden Zeichnungsbeschreibung. In der Zeichnung sind nicht erfindungsgemäße Ausführungsbeispiele dargestellt, soweit nicht anders gekennzeichnet. Die Zeichnung, die Beschreibung und die Ansprüche enthalten zahlreiche Merkmale in Kombination.

Es zeigen:
- Fig. 1: eine tragbare Werkzeugmaschine mit einer Werkzeugmaschinentrennvorrichtung in einer schematischen Darstellung,
- Fig. 2: eine Detailansicht der Werkzeugmaschinentrennvorrichtung mit einer ein zumindest im Wesentlichen parallel zu einer Schneidebene verlaufenden Codierungselement umfassenden Codierungseinheit in einer schematischen Darstellung,
- Fig. 3: eine Detailansicht einer alternativen Werkzeugmaschinentrennvorrichtung mit einer ein zumindest im Wesentlichen senkrecht zu einer Schneidebene verlaufenden Codierungselement umfassenden Codierungseinheit in einer schematischen Darstellung,
- Fig. 4: eine Detailansicht einer weiteren, alternativen Werkzeugmaschinentrennvorrichtung mit einer ein zumindest im Wesentlichen quer zu einer Mittelachse einer Führungseinheit der weiteren, alternativen Werkzeugmaschinentrennvorrichtung verlaufenden Codierungselement umfassende Codierungseinheit in einer schematischen Darstellung,
- Fig. 5: eine Detailansicht einer weiteren, alternativen Werkzeugmaschinentrennvorrichtung mit einer elektronischen Codierungseinheit in einer schematischen Darstellung,
- Fig. 6: eine Detailansicht einer weiteren, alternativen Werkzeugmaschinentrennvorrichtung in einer schematischen Darstellung und
- Fig. 7: eine Detailansicht einer weiteren, alternativen Werkzeugmaschinentrennvorrichtung in einer schematischen Darstellung.

### Beschreibung der Ausführungsbeispiele

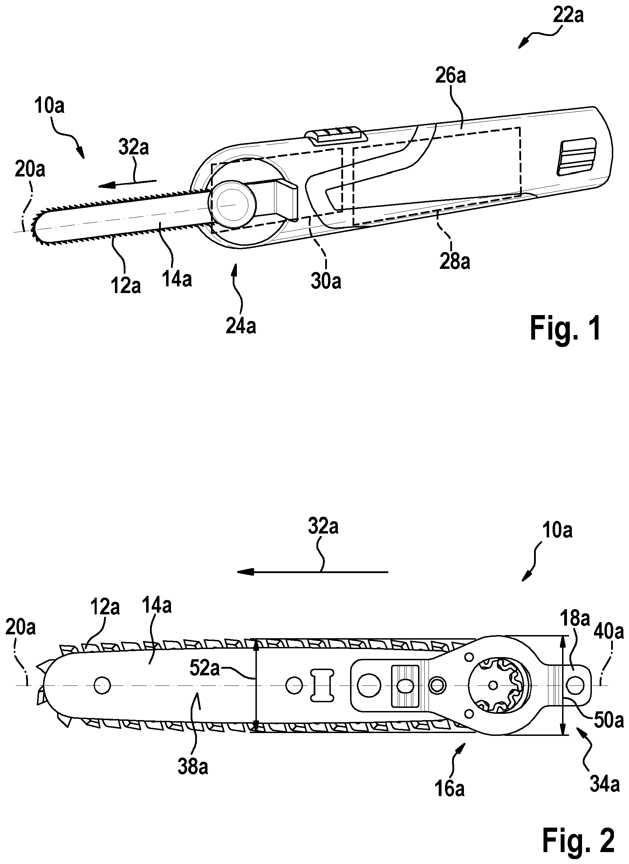

Figur 1 zeigt eine tragbare Werkzeugmaschine 22a mit einer Werkzeugmaschinentrennvorrichtung 10a, die zusammen ein Werkzeugmaschinensystem bilden. Die Werkzeugmaschinentrennvorrichtung 10a umfasst zumindest einen Schneidstrang 12a und zumindest eine Führungseinheit 14a zur Führung des Schneidstrangs 12a. Die tragbare Werkzeugmaschine 22a weist eine Kopplungsvorrichtung 24a zur formschlüssigen und/oder kraftschlüssigen Kopplung der Werkzeugmaschinentrennvorrichtung 10a auf. Die Kopplungsvorrichtung 24a kann hierbei als Bajonettverschluss und/oder als eine andere, einem Fachmann als sinnvoll erscheinende Kopplungsvorrichtung ausgebildet sein. Ferner weist die tragbare Werkzeugmaschine 22a ein Werkzeugmaschinengehäuse 26a auf, das eine Antriebseinheit 28a und eine Getriebeeinheit 30a der tragbaren Werkzeugmaschine 22a umschließt. Die Antriebseinheit 28a und die Getriebeeinheit 30a sind zur Erzeugung eines auf die Werkzeugmaschinentrennvorrichtung 10a übertragbaren Antriebsmoments auf eine, einem Fachmann bereits bekannte Art und Weise wirkungsmäßig miteinander verbunden. Die Getriebeeinheit 30a ist als Winkelgetriebe ausgebildet. Die Antriebseinheit 28a ist als Elektromotoreinheit ausgebildet. Es ist jedoch auch denkbar, dass die Antriebseinheit 28a und/oder die Getriebeeinheit 30a eine andere, einem Fachmann als sinnvoll erscheinende Ausgestaltung aufweisen. Die Antriebseinheit 28a ist dazu vorgesehen, den Schneidstrang 12a der Werkzeugmaschinentrennvorrichtung 10a in zumindest einem Betriebszustand über die Getriebeeinheit 30a anzutreiben. Hierbei wird der Schneidstrang 12a in der Führungseinheit 14a der Werkzeugmaschinentrennvorrichtung 10a entlang einer Schneidrichtung 32a des Schneidstrangs 12a in der Führungseinheit 14a bewegt. Zum Antrieb des Schneidstrangs 12a weist die Getriebeeinheit 30a der tragbaren Werkzeugmaschine 22a ein Drehmomentübertragungselement (hier nicht näher dargestellt) auf, das zur Übertragung von Kräften und/oder von Drehmomenten auf den Schneidstrang 12a mit dem Schneidstrang 12a koppelbar ist. Es ist jedoch auch denkbar, dass die Werkzeugmaschinentrennvorrichtung 10a ein Drehmomentübertragungselement aufweist, das drehbar an der Führungseinheit 14a gelagert ist und in den Schneidstrang 12a eingreift.

Figur 2 zeigt die Werkzeugmaschinentrennvorrichtung 10a in einem von der Kopplungsvorrichtung 24a der tragbaren Werkzeugmaschine 22a entkoppelten Zustand. Die Werkzeugmaschinentrennvorrichtung 10a weist den Schneidstrang 12a und die Führungseinheit 14a auf, die zusammen ein geschlossenes System bilden. Der Schneidstrang 12a wird mittels der Führungseinheit 14a geführt. Hierzu weist die Führungseinheit 14a zumindest ein als Führungsnut ausgebildetes Führungselement (hier nicht näher dargestellt) auf, mittels dessen der Schneidstrang 12a geführt wird. Hierbei wird der Schneidstrang 12a mittels die Führungsnut begrenzenden Randbereichen der Führungseinheit 14a geführt. Es ist jedoch auch denkbar, dass das Führungselement in einer anderen, einem Fachmann als sinnvoll erscheinenden Art und Weise, wie beispielsweise als rippenartige Anformung an der Führungseinheit 14a, die in eine Ausnehmung an dem Schneidstrang 12a eingreift, ausgebildet ist. Der Schneidstrang 12a umfasst ferner eine Vielzahl von miteinander verbundenen Schneidstrangsegmenten, die zusammen den als Schneidkette ausgebildeten Schneidstrang 12a bilden.

Die Werkzeugmaschinentrennvorrichtung 10a weist zumindest eine Codierungseinheit 16a auf, die zumindest ein Codierungselement 18a umfasst, das dazu vorgesehen ist, zumindest eine Kopplungsschnittstelle der Führungseinheit 14a zu codieren. Die Codierungseinheit 16a kann auch eine Vielzahl an Codierungselementen 18a aufweisen, die gleichmäßig und/oder ungleichmäßig verteilt an der Führungseinheit 14a angeordnet sind. Die Codierungseinheit 16a ist formschlüssig und/oder kraftschlüssig an der Führungseinheit 14a fixiert. Hierbei ist die Codierungseinheit 16a formschlüssig und/oder kraftschlüssig an einer Außenfläche 38a der Führungseinheit 14a fixiert. Somit ist zumindest das Codierungselement 18a formschlüssig und/oder kraftschlüssig an der Führungseinheit 14a fixiert. Das Codierungselement 18a ist hierbei formschlüssig und/oder kraftschlüssig an der Außenfläche 38a der Führungseinheit 14a fixiert. Zudem umfasst die Codierungseinheit 16a zumindest eine Spanaustrittsöffnung (hier nicht näher dargestellt), die einen Spanauswurf während einer Bearbeitung eines Werkstücks in einem angetriebenen Zustand der Werkzeugmaschinentrennvorrichtung 10a ermöglicht. Es ist jedoch auch denkbar, dass die Codierungseinheit 16a einstückig an die Führungseinheit 14a angeformt ist. Zudem ist die Codierungseinheit 16a im Bereich einer Antriebsseite 34a der Führungseinheit 14a angeordnet. Die Antriebsseite 34a ist in einem mit der Kopplungsvorrichtung 24a gekoppelten Zustand der Werkzeugmaschinentrennvorrichtung 10a in der Kopplungsvorrichtung 24a angeordnet. Hierbei greift das Drehmomentübertragungselement der Getriebeeinheit 30a im Bereich der Antriebsseite 34a in die Führungseinheit 14a ein. Zudem greift das Drehmomentübertragungselement der Getriebeeinheit 30a in einem mit der Kopplungsvorrichtung 24a gekoppelten Zustand der Werkzeugmaschinentrennvorrichtung 10a in den Schneidstrang 12a ein.

Das Codierungselement 18a ist als Längsfortsatz ausgebildet. Hierbei weist das Codierungselement 18a, betrachtet in einer Schneidebene des Schneidstrangs 12a, zumindest in einem Teilbereich des Codierungselements 18a eine quaderförmige Ausgestaltung auf. Es ist jedoch auch denkbar, dass das Codierungselement 18a zumindest in einem Teilbereich des Codierungselements 18a, betrachtet in der Schneidebene des Schneidstrangs 12a, eine andere, einem Fachmann als sinnvoll erscheinende Ausgestaltung aufweist, wie beispielsweise eine elliptische Ausgestaltung, eine kreissegmentförmige Ausgestaltung usw. Das Codierungselement 18a erstreckt sich zudem zu einer Codierung der Kopplungsschnittstelle zumindest im Wesentlichen parallel zur Schneidebene des Schneidstrangs 12a. Hierbei ragt das Codierungselement 18a, betrachtet in der Schneidebene des Schneidstrangs 12a, axial über die Führungseinheit 14a hinaus. Die Führungseinheit 14a weist eine Mittelachse 20a auf, zu der die Führungseinheit 14a zumindest im Wesentlichen symmetrisch ausgebildet ist. Das Codierungselement 18a erstreckt sich entlang einer zumindest im Wesentlichen parallel zur Mittelachse 20a der Führungseinheit 14a verlaufenden Richtung axial über die Führungseinheit 14a hinaus. Ferner ist das Codierungselement 18a hinsichtlich der Mittelachse 20a der Führungseinheit 14a achsensymmetrisch ausgebildet. Eine Längsachse 40a des Codierungselements 18a ist koaxial zur Mittelachse 20a der Führungseinheit 14a ausgebildet. Die Längsachse 40a des Codierungselements 18a bildet somit eine Symmetrieachse des Codierungselements 18a. Es ist jedoch auch denkbar, dass das Codierungselement 18a asymmetrisch zur Längsachse 40a des Codierungselements 18a ausgebildet ist.

Ferner weist das Codierungselement 18a zumindest in einem Teilbereich, entlang einer zumindest im Wesentlichen parallel zu einer Schneidebene des Schneidstrangs 12a verlaufenden Richtung betrachtet, eine größere maximale Breitenerstreckung 50a auf als eine maximale Breitenerstreckung 52a der Führungseinheit 14a und/oder des Schneidstrangs 12a. Das Codierungselement 18a weist eine maximale Breitenerstreckung 50a auf, die größer ist als eine maximale Breitenerstreckung 52a des Schneidstrangs 12a zusammen mit der Fürhungseinheit 14a. Hierbei ist der Schneidstrang 12a an der Führungseinheit 14a montiert. Zudem weist der quaderförmige Teilbereich des Codierungselements 18a eine kleinere Breitenersteckung auf als die maximale Breitenerstreckung 50a des Codierungselements 18a. Zudem ist es denkbar, dass am quaderförmigen Teilbereich des Codierungselements 18a, der sich axial über die Führungseinheit 14a hinaus erstreckt, Aussparungen oder Fortsätze an einem Umfang des quaderförmigen Teilbereichs des Codierungselements 18a angeordnet sind, die eine zusätzliche Codierung und/oder Drehmomentabstützung ermöglichen.

Bei einer Kopplung der Werkzeugmaschinentrennvorrichtung 10a mit der Kopplungsvorrichtung 24a wirkt das Codierungselement 18a mit einer Codierungsausnehmung (hier nicht näher dargestellt) der Kopplungsvorrichtung 24a zusammen. Die Codierungsausnehmung ist hierbei korrespondierend mit dem Codierungselement 18a ausgebildet. Das Codierungselement 18a und die Codierungsausnehmung bilden in einem mit der Kopplungsvorrichtung 24a gekoppelten Zustand der Werkzeugmaschinentrennvorrichtung 10a eine formschlüssige Verbindung, die zusätzlich zu einer Codierung der Kopplungsschnittstelle eine Drehmomentabstützung bei einer Bearbeitung eines Werkstücks (hier nicht näher dargestellt) mittels der Werkzeugmaschinentrennvorrichtung 10a und der tragbaren Werkzeugmaschine 22a bewirkt. Eine Kopplung der Werkzeugmaschinentrennvorrichtung 10a mit einer Kopplungsvorrichtung, die entkoppelt von einer Codierungsausnehmung ausgebildet ist, wird mittels der Codierungseinheit 16a verhindert.

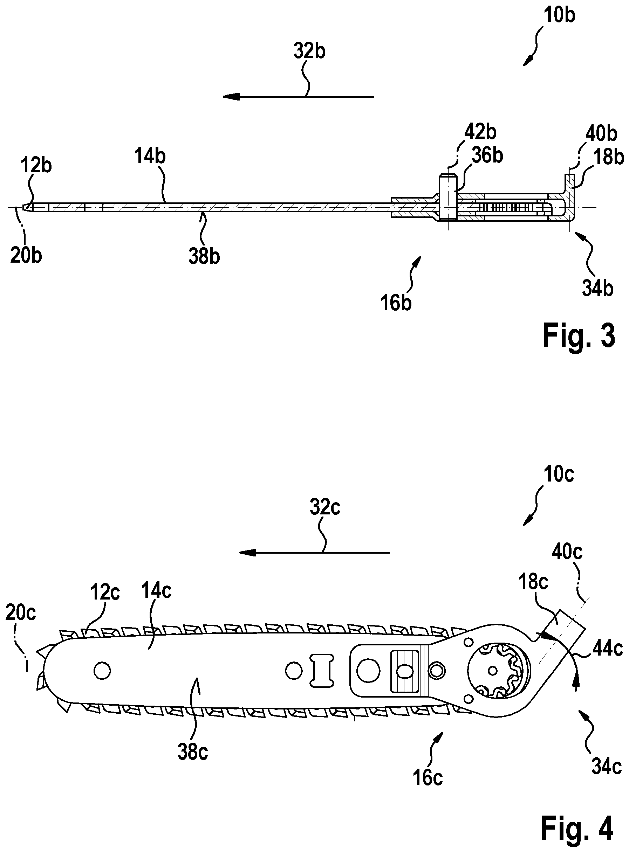

In Figuren 3 bis 7 sind alternative Ausführungsbeispiele dargestellt. Im Wesentlichen gleichbleibende Bauteile, Merkmale und Funktionen sind grundsätzlich mit den gleichen Bezugszeichen beziffert. Zur Unterscheidung der Ausführungsbeispiele sind den Bezugszeichen der Ausführungsbeispiele die Buchstaben a bis f hinzugefügt. Die nachfolgende Beschreibung beschränkt sich im Wesentlichen auf die Unterschiede zu dem in den Figuren 1 und 2 beschriebenen, ersten Ausführungsbeispiel, wobei bezüglich gleichbleibender Bauteile, Merkmale und Funktionen auf die Beschreibung des ersten Ausführungsbeispiels in den Figuren 1 und 2 verwiesen werden kann.

Figur 3 zeigt eine alternative Werkzeugmaschinentrennvorrichtung 10b, die zumindest einen Schneidstrang 12b und zumindest eine Führungseinheit 14b zur Führung des Schneidstrangs 12b aufweist. Der Schneidstrang 12b und die Führungseinheit 14b bilden zusammen ein geschlossenes System. Die Werkzeugmaschinentrennvorrichtung 10b umfasst ferner zumindest eine Codierungseinheit 16b, die zumindest ein Codierungselement 18b aufweist, das dazu vorgesehen ist, zumindest eine Kopplungsschnittstelle der Führungseinheit 14b zu codieren. Das Codierungselement 18b erstreckt sich zu einer Codierung der Kopplungsschnittstelle zumindest im Wesentlichen quer zu einer Schneidebene des Schneidstrangs 12b. Hierbei erstreckt sich das Codierungselement 18b zu einer Codierung der Kopplungsschnittstelle zumindest im Wesentlichen quer zu einer Schneidebene des Schneidstrangs 12b. Das Codierungselement 18b ist somit als Querfortsatz ausgebildet. Hierbei ist das Codierungselement 18b bolzenförmig ausgebildet. Das Codierungselement 18b erstreckt sich entlang einer zumindest im Wesentlichen senkrecht zu einer Außenfläche 38b der Führungseinheit 14b über die Führungseinheit 14b hinaus. Eine Längsachse 40b des Codierungselements 18b verläuft hierbei zumindest im Wesentlichen senkrecht zu einer Mittelachse 20b der Führungseinheit 14b.

Ferner umfasst die Codierungseinheit 16b ein weiteres Codierungselement 36b. Das weitere Codierungselement 36b ist analog zum Codierungselement 18b ausgebildet. Somit ist das weitere Codierungselement 36b als bolzenförmiger Querfortsatz ausgebildet, der entlang der zumindest im Wesentlichen senkrecht zur Außenfläche 38b der Führungseinheit 14b verlaufenden Richtung über die Führungseinheit 14b hinaus ragt. Eine Längsachse 42b des weiteren Codierungselements 36b verläuft hierbei zumindest im Wesentlichen senkrecht zur Mittelachse 20b der Führungseinheit 14b. Das Codierungselement 18b und das weitere Codierungselement 36b sind im Bereich einer Antriebsseite 34b an der Führungseinheit 14b angeordnet. Es ist jedoch auch denkbar, dass die Codierungseinheit 16b eine von zwei abweichende Anzahl an Codierungselementen 18b, 36b aufweist.

Bei einer Kopplung der Werkzeugmaschinentrennvorrichtung 10b mit einer Kopplungsvorrichtung einer tragbaren Werkzeugmaschine (hier nicht näher dargestellt) wirkt das Codierungselement 18b und das weitere Codierungselement 36b jeweils mit einer Codierungsausnehmung (hier nicht näher dargestellt) der Kopplungsvorrichtung zusammen. Die Codierungsausnehmungen sind hierbei korrespondierend mit dem Codierungselement 18b und dem weiteren Codierungselement 36b ausgebildet.

Figur 4 zeigt eine weitere, alternative Werkzeugmaschinentrennvorrichtung 10c, die zumindest einen Schneidstrang 12c und zumindest eine Führungseinheit 14c zur Führung des Schneidstrangs 12c aufweist. Der Schneidstrang 12c und die Führungseinheit 14c bilden zusammen ein geschlossenes System. Die Werkzeugmaschinentrennvorrichtung 10c umfasst ferner zumindest eine Codierungseinheit 16c, die zumindest ein Codierungselement 18c aufweist, das dazu vorgesehen ist, zumindest eine Kopplungsschnittstelle der Führungseinheit 14c zu codieren. Das Codierungselement 18c erstreckt sich zu einer Codierung der Kopplungsschnittstelle zumindest im Wesentlichen parallel zu einer Schneidebene des Schneidstrangs 12c. Hierbei ragt das Codierungselement 18c, betrachtet in der Schneidebene des Schneidstrangs 12c, axial über die Führungseinheit 14c hinaus. Zudem erstreckt sich das Codierungselement 18c, betrachtet in der Schneidebene des Schneidstrangs 12c, zumindest im Wesentlichen quer zu einer Mittelachse 20c der Führungseinheit 14c. Somit schließen eine Längsachse 40c des Codierungselements 18c und die Mittelachse 20c der Führungseinheit 14c einen von 180° und einem ganzzahligen Vielfachen von 180° verschiedenen Winkel 44c ein. Erfindungsgemäß ist die Mittelachse 40c des Codierungselements 18c zumindest im Wesentlichen parallel versetzt zur Mittelachse 20c der Führungseinheit 14c angeordnet (hier nicht näher dargestellt). Hierbei bildet das Codierungselement 18c einen außermittig angeordneten Fortsatz, der sich, betrachtet in der Schneidebene des Schneidstrangs 12c, zumindest im Wesentlichen parallel zur Mittelachse 20c der Führungseinheit 14c axial über die Führungseinheit 14c hinaus erstreckt.

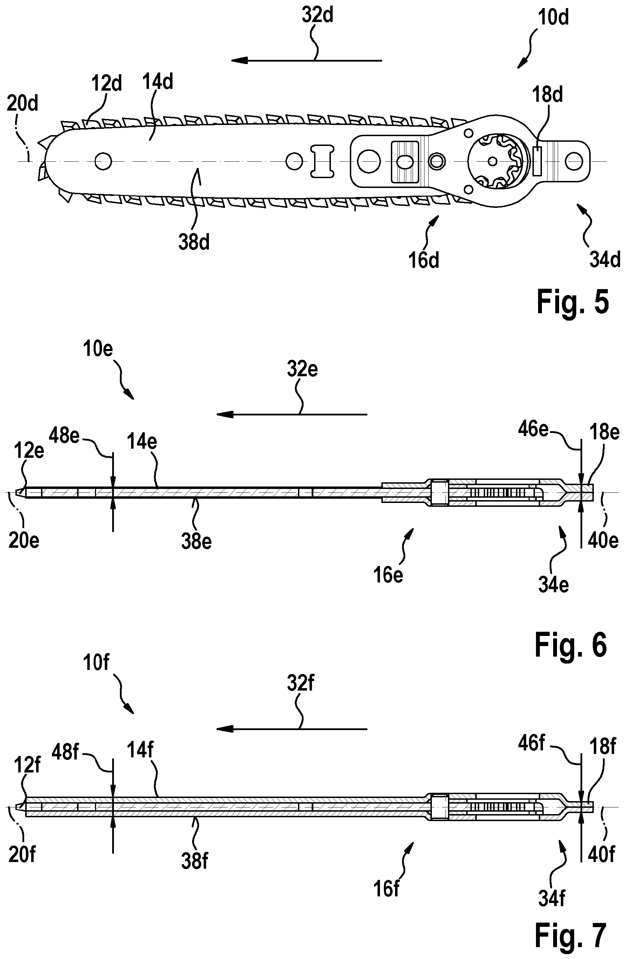

Figur 5 zeigt eine weitere, alternative Werkzeugmaschinentrennvorrichtung 10d, die zumindest einen Schneidstrang 12d und zumindest eine Führungseinheit 14d zur Führung des Schneidstrangs 12d aufweist. Der Schneidstrang 12d und die Führungseinheit 14d bilden zusammen ein geschlossenes System. Die Werkzeugmaschinentrennvorrichtung 10d umfasst ferner zumindest eine Codierungseinheit 16d, die zumindest ein Codierungselement 18d aufweist, das dazu vorgesehen ist, zumindest eine Kopplungsschnittstelle der Führungseinheit 14d zu codieren. Die Codierungseinheit 16d weist zumindest eine elektronische Codeübermittlungseinheit auf. Hierbei ist das Codierungselement 18d als RFID-Chip ausgebildet. Somit kann eine elektronische Codierung der Kopplungsschnittstelle der Führungseinheit 14d mittels der Codierungseinheit 16d erreicht werden.

Figur 6 zeigt eine weitere, alternative Werkzeugmaschinentrennvorrichtung 10e, die zumindest einen Schneidstrang 12e und zumindest eine Führungseinheit 14e zur Führung des Schneidstrangs 12e aufweist. Der Schneidstrang 12e und die Führungseinheit 14e bilden zusammen ein geschlossenes System. Die Werkzeugmaschinentrennvorrichtung 10e umfasst ferner zumindest eine Codierungseinheit 16e, die zumindest ein Codierungselement 18e aufweist, das dazu vorgesehen ist, zumindest eine Kopplungsschnittstelle der Führungseinheit 14e zu codieren. Das Codierungselement 18e ist hierbei als Fortsatz ausgebildet, der zumindest in einem Teilbereich, entlang einer zumindest im Wesentlichen senkrecht zu einer Schneidebene des Schneidstrangs 12e verlaufenden Richtung betrachtet, eine größere maximale Dickenerstreckung 46e aufweist als eine maximale Dickenerstreckung 48e der Führungseinheit 14e und/oder des Schneidstrangs 12e. Somit weist die Codierungseinheit 16e, entlang einer zumindest im Wesentlichen senkrecht zur Schneidebene des Schneidstrangs verlaufenden Richtung betrachtet, eine größere maximale Dickenerstreckung 46e auf als die maximale Dickenerstreckung 48e der Führungseinheit 14e und/oder des Schneidstrangs 12e. Das Codierungselement 18e ist als Längsfortsatz ausgebildet. Hierbei ist das Codierungselement 18e an einer Außenfläche 38e der Führungseinheit 14e fixiert. Hierbei ragt das Codierungselement 18e, betrachtet in der Schneidebene des Schneidstrangs 12e, axial über die Führungseinheit 14e hinaus.

Figur 7 zeigt eine weitere, alternative Werkzeugmaschinentrennvorrichtung 10f, die zumindest einen Schneidstrang 12f und zumindest eine Führungseinheit 14f zur Führung des Schneidstrangs 12f aufweist. Der Schneidstrang 12f und die Führungseinheit 14f bilden zusammen ein geschlossenes System. Die Werkzeugmaschinentrennvorrichtung 10f umfasst ferner zumindest eine Codierungseinheit 16f, die zumindest ein Codierungselement 18f aufweist, das dazu vorgesehen ist, zumindest eine Kopplungsschnittstelle der Führungseinheit 14f zu codieren. Das Codierungselement 18f ist als Fortsatz ausgebildet, der zumindest in einem Teilbereich, entlang einer zumindest im Wesentlichen senkrecht zu einer Schneidebene des Schneidstrangs 12f verlaufenden Richtung betrachtet, eine kleinere maximale Dickenerstreckung 46f aufweist als eine maximale Dickenerstreckung 48f der Führungseinheit 14f und/oder des Schneidstrangs 12f. Somit ist das Codierungselement 18f als Längsfortsatz ausgebildet. Hierbei ragt das Codierungselement 18f, betrachtet in der Schneidebene des Schneidstrangs 12f, axial über die Führungseinheit 14f hinaus. In einer alternativen, hier nicht näher dargestellten Ausgestaltung der Werkzeugmaschinentrennvorrichtung 10f ist es denkbar, dass das Codierungselement 18f, betrachtet entlang einer zumindest im Wesentlichen parallel zu einer Mittelachse 20f der Führungseinheit 14f verlaufenden Richtung, abwechselnd eine kleinere maximale Dickenerstreckung 46f und eine größere maximale Dickenerstreckung aufweist als eine maximale Dickenerstreckung 48f der Führungseinheit 14f und/oder des Schneidstrangs 12f.

## Patentansprüche

1. Werkzeugmaschinentrennvorrichtung mit zumindest einem Schneidstrang (12a), mit zumindest einer Führungseinheit (14a) zu einer Führung des Schneidstrangs (12a), und mit zumindest einer Codierungseinheit (16a), die zumindest ein Codierungselement (18a) aufweist, das dazu vorgesehen ist, zumindest eine Kopplungsschnittstelle der Führungseinheit (14a) zu codieren, wobei eine Mittelachse (40c) des Codierungselements (18c) zumindest im Wesentlichen parallel versetzt zur Mittelachse (20c) der Führungseinheit (14c) angeordnet ist, wobei das Codierungselement (18c) einen außermittig angeordneten Fortsatz bildet, der sich, betrachtet in der Schneidebene des Schneidstrangs (12c), zumindest im Wesentlichen parallel zur Mittelachse (20c) der Führungseinheit (14c) axial über die Führungseinheit (14c) hinaus erstreckt, wobei das Codierungselement bevorzugt entlang einer Mittelachse der Führungseinheit axial über die Führungseinheit hinausragt, wobei das Codierungselement (18a) zumindest in einem Teilbereich, entlang einer zumindest im Wesentlichen parallel zu einer Schneidebene des Schneidstrangs (12a) verlaufenden Richtung betrachtet, eine größere maximale Breitenerstreckung (50a) aufweist als eine maximale Breitenerstreckung (52a) des Schneidstrangs (12a), **dadurch gekennzeichnet, dass** der Teilbereich des Codierungselements, in dem das Codierungselement die maximale Breitenerstreckung aufweist, ellipsenförmig ausgebildet ist.

2. Werkzeugmaschinentrennvorrichtung nach einem der vorhergehenden Ansprüche, **dadurch gekennzeichnet, dass** sich das Codierungselement (18a) zu einer Codierung der Kopplungsschnittstelle zumindest im Wesentlichen parallel zu einer Schneidebene des Schneidstrangs (12a) erstreckt.

3. Werkzeugmaschinentrennvorrichtung nach einem der vorhergehenden Ansprüche, **dadurch gekennzeichnet, dass** das Codierungselement (18a), betrachtet in einer Schneidebene des Schneidstrangs (12a), axial über die Führungseinheit (14a) hinausragt.

4. Werkzeugmaschinensystem mit zumindest einer Werkzeugmaschinentrennvorrichtung nach einem der Ansprüche 1 bis 3 und mit einer tragbaren Werkzeugmaschine aufweisend eine Kopplungsvorrichtung (24a) zur formschlüssigen und/oder kraftschlüssigen Kopplung mit der Werkzeugmaschinentrennvorrichtung.

## Claims

1. Power-tool parting device, having at least one cutting strand (12a), having at least one guide unit (14a) for guiding the cutting strand (12a), and having at least one coding unit (16a), which has at least one coding element (18a) that is provided to code at least one coupling interface of the guide unit (14a), wherein a central axis (40c) of the coding element (18c) is arranged such that it is offset in a manner at least substantially parallel to the central axis (20c) of the guide unit (14c), wherein the coding element (18c) forms an eccentrically arranged extension which, as viewed in the cutting plane of the cutting strand (12c), extends axially beyond the guide unit (14c), in a manner at least substantially parallel to the central axis (20c) of the guide unit (14c), wherein the coding element preferably projects axially beyond the guide unit along a central axis of the guide unit, wherein the coding element (18a), at least in a partial region, as viewed in a direction that is at least substantially parallel to a cutting plane of the cutting strand (12a), has a greater maximum width extent (50a) than a maximum width extent (52a) of the cutting strand (12a), **characterized in that** the partial region of the coding element in which the coding element has the maximum width extent is formed in an elliptical manner.

2. Power-tool parting device according to one of the preceding claims, **characterized in that,** for the purpose of coding the coupling interface, the coding element (18a) extends at least substantially parallel to a cutting plane of the cutting strand (12a) .

3. Power-tool parting device according to one of the preceding claims, **characterized in that** the coding element (18a), as viewed in a cutting plane of the cutting strand (12a), projects axially beyond the guide unit (14a).

4. Power tool system having at least one power-tool parting device according to one of Claims 1 to 3 and having a portable power tool having a coupling device (24a) for coupling to the power-tool parting device in a form-fitting and/or force-fitting manner.

## Revendications

1. Dispositif de séparation pour machine-outil, comprenant au moins un brin de coupe (12a), au moins une unité de guidage (14a) pour guider le brin de coupe (12a), et au moins une unité de codage (16a) qui présente au moins un élément de codage (18a) qui est prévu pour coder au moins une interface de couplage de l'unité de guidage (14a), dans lequel un axe central (40c) de l'élément de codage (18c) est disposé de manière décalée au moins substantiellement en parallèle à l'axe central (20c) de l'unité de guidage (14c), l'élément de codage (18c) formant un prolongement disposé de manière excentrée qui, vu dans le plan de coupe du brin de coupe (12c), s'étend axialement au-delà de l'unité de guidage (14c), au moins substantiellement en parallèle à l'axe central (20c) de l'unité de guidage (14c), l'élément de codage dépassant axialement de l'unité de guidage de préférence le long d'un axe central de l'unité de guidage, l'élément de codage (18a) présentant au moins dans une zone partielle, vue le long d'une direction s'étendant au moins substantiellement en parallèle au plan de coupe du brin de coupe (12a), une dimension de largeur maximale (50a) supérieure à une dimension de largeur maximale (52a) du brin de coupe (12a),
**caractérisé en ce que** la zone partielle de l'élément de codage, dans laquelle l'élément de codage présente la dimension de largeur maximale, est réalisée en forme d'ellipse.

2. Dispositif de séparation pour machine-outil selon l'une quelconque des revendications précédentes, **caractérisé en ce que** l'élément de codage (18a) s'étend au moins substantiellement en parallèle à un plan de coupe du brin de coupe (12a) pour coder l'interface de couplage.

3. Dispositif de séparation pour machine-outil selon l'une quelconque des revendications précédentes, **caractérisé en ce que** l'élément de codage (18a), vu dans un plan de coupe du brin de coupe (12a), dépasse axialement de l'unité de guidage (14a).

4. Système de machine-outil, comprenant au moins un dispositif de séparation pour machine-outil selon l'une quelconque des revendications 1 à 3 et comprenant une machine-outil portable qui présente un dispositif de couplage (24a) pour le couplage par complémentarité de forme et/ou par adhérence avec le dispositif de séparation pour machine-outil.
